# EUROPEAN PATENT SPECIFICATION

(11) **EP 3 586 612 B1**
(45) Date of publication and mention of the grant of the patent: **22.07.2020**
(21) Application number: 18723043.8
(22) Date of filing: 26.02.2018
(51) Int. Cl.: A01J 25/13, A22C 7/00, B65D 21/02

(54) **A MOULD AND MOULD STACKING SYSTEM FOR FOOD PRODUCTS**
FORM UND SYSTEM ZUM STAPELN VON FORMEN FÜR NAHRUNGSMITTEL
MOULE ET SYSTÈME D'EMPILEMENT DE MOULES POUR PRODUITS ALIMENTAIRES

(30) Priority: 24.02.2017 ES 201730252
(43) Date of publication of application: 01.01.2020
(73) Proprietor: Tecnical Tecnologia Aplicada, S.L., 17457 Campllong (Girona) (ES)
(72) Inventor: CALVET PUIG, Joan, 17457 Campllong (Girona) (ES)
(74) Representative: Manresa Val, Manuel
(86) International application number: PCT/ES2018/070144
(87) International publication number: WO 2018/154172

(56) References cited:
- FR-A1- 2 882 630

## Description

The invention relates to a mould and mould system for food products, of the type comprising at least one support, with an upper side comprising at least one housing defining an upper opening for placing the food product to be moulded, external legs and a lower side, wherein it comprises fixing means, in form of a pin or a latch, which attach and block the support to the external legs of an upper support, and in that the lower side is a lid of a lower support to which it is attached and blocked by means of the external legs that fit in the lower support and which are attached and blocked by respective fixing means; with the supports being identical.

### BACKGROUND TO THE INVENTION

Different moulds are known in the state of the art which are stacked with a food product to be processed inside them.

So, European Patent application No. 2179656 "SYSTEM FOR STACKING AND UNSTACKING MOLD UNITS", from 2009, is known, in the name of CREMONA INOXIDABLE S.R.L., which relates to a system for stacking and/or unstacking stackable units in a unit handling apparatus, wherein the system comprises a support means including a frame for taking one stackable unit from a pile of units and extracting the units, one at a time, from the stack, and for taking units provided in the system to stack them in a pile of units, and transport means for receiving stacked units and delivering unstacked units outside the system.

Also, European Patent application No. 0292417 "STACKABLE SETS OF CONTAINERS INTENDED TO HOLD FOOD PRODUCTS DURING COOKING", from 1988 is known, in the name of ARMOR-INOX, S.A., which relates to a stackable set which has four trays placed one next to the other and joined together by the side plates. On each side, a front foot and a rear foot are welded to the outer wall of the outermost tray. Seen from the side, the feet are rectilinear and tilted, whereas, seen from the front or from behind, they have a rectilinear vertical central part and an upper part tilted outwards. On each side, the upper ends of the feet are joined by the bars and the opposing faces of the front foot and the rear foot have end stops. The set of the invention is stackable or unstackable by means of handlers.

It is worth to mention French Patent application No. 2485884 "ASSEMBLAGE DE PRESSAGE DE MOULES A JAMBONS", from 1980, from the firm ARMOR-INOX, S.A., which relates to a mould pressing set wherein the bottom of the mould box serves as the lid for the mould placed directly beneath.

Finally, there is in the state of the art, French Patent application 2453791 "BOX PALLET SECURING DEVICE - WITH SLEEVES STACKED ON PALLET AND SECURED BY OPPOSED HOOKED MEMBERS CONNECTED BY PIVOTAL LEVER MECHANISM AND LATCH", from 1979, in the name of Kenneth JOHANSSON et al., which relates to one or several square or rectangular, box-like, bottomless elements that are stacked one on top of another on a pallet. The elements have a hook and they are connected by the link and the rotating lever. The element's hook is U-shaped and it is applied to the upper edge of a wall of the upper box. The element's hook is L-shaped and it couples under the pallet platform. The lever turns upwards to drag the elements together, so that they are blocked by means of a latch, securing the boxes to the pallet.

French Patent application FR 2 882 630 discloses a mould for food products according to the preamble of claim 1.

### BRIEF DESCRIPTION OF THE INVENTION

This application falls within the sector of moulds for food products.

In this invention the terms "supports" and "moulds" will be used in an equivalent manner.

Traditionally a cell system has been used to store the moulds and mould the food product arranged in a housing inside them.

It comprises structures that include decks where each of them has a space for placing the mould and then a pressing element that compresses the food goes down from the roof of said deck.

This type of structures suffers essentially from the drawback of cleaning of the pressing elements, which leave corners that cannot be cleaned, and this is a source for bacterial contamination.

Other manufacturers have moulds that end up entering some stockpot with an upper lid that closes the stockpot and which in turn presses the moulds downwards.

The drawback lies in the fact that it can only be used in case when the stockpot is full and with this system you cannot use oven cooking.

Finally, in general they all suffer from a problem regarding storage space, since they need to be kept in large facilities.

European Patent No. 0292417. solves the problems because the moulds can be washed without any problem, they can be stored by stacking them, a smaller amount of moulds can be used because it is not necessary for the stockpot lid to press and the oven can be used.

The problem is that the fixing system between moulds is under pressure, which prevents lifting them upwards, using a lifting means.

Even if a system were designed to attach some to others, in view of what is known, it cannot be automated, due to difficulties with the mould-release system.

Therefore, the inventor has proposed a system wherein the moulds are blocked against one another by means of a latch or pin-like system, so that when the upper mould fits onto the lower one, a pin or latch in the lower mould is activated, which blocks the upper mould.

The invention relates to a mould for food products according to claim 1.

### BRIEF DESCRIPTION OF THE DRAWINGS

In order to facilitate the explanation, five sheets of drawings are attached to this specification, which represent a practical embodiment thereof that is shown as a non-limiting example of the scope of this invention:
- Figure 1 is a general view of a mould that is the object of this invention,
- Figure 2 is a view of two mounted supports,
- Figure 3 is a sectioned view of Figure 2, along the line III-III,
- Figure 4 is a sectioned view of Figure 2, along the line IV-IV,
- Figure 5 is a general view of the stacking of the moulds

### SPECIFIC EMBODIMENT OF THIS INVENTION

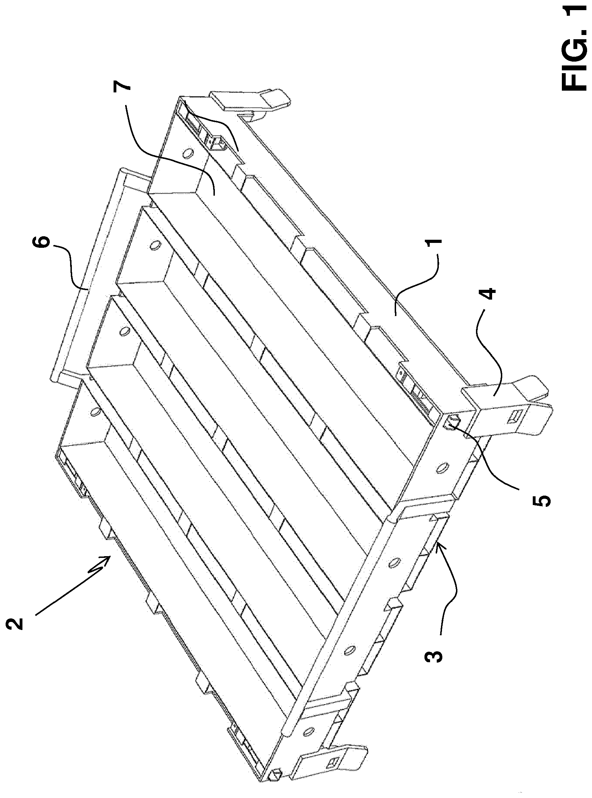

Thus, Figure 1 illustrates a first support 1, with its upper side 2 and its lower side 3, exterior legs 4, fixing means 5, handles 6, and a housing 7.

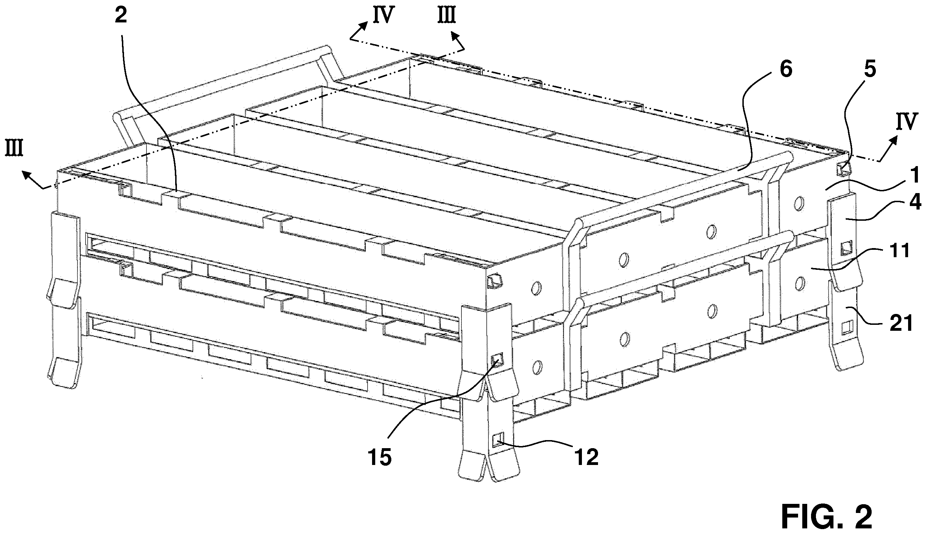

Figure 2 represents first support 1 with its upper side 2, its exterior legs 4 and its fixing means 5, handles 6, a lower support 11 with its legs 21, its fixing means 15 and a through hole 12.

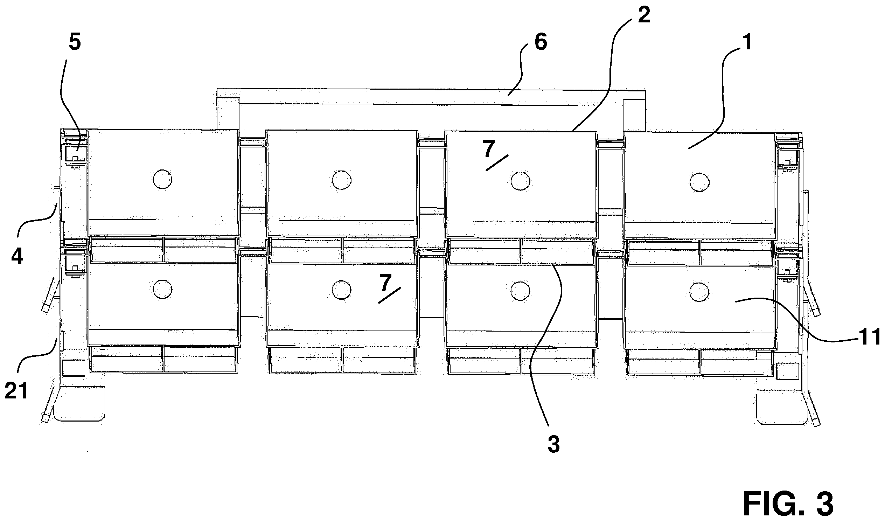

Figure 3 shows first support 1 with its upper side 2, its lower side 3 and its exterior legs 4, fixing means 5, 15, handles 6, housings 7, and lower support 11 with its legs 21.

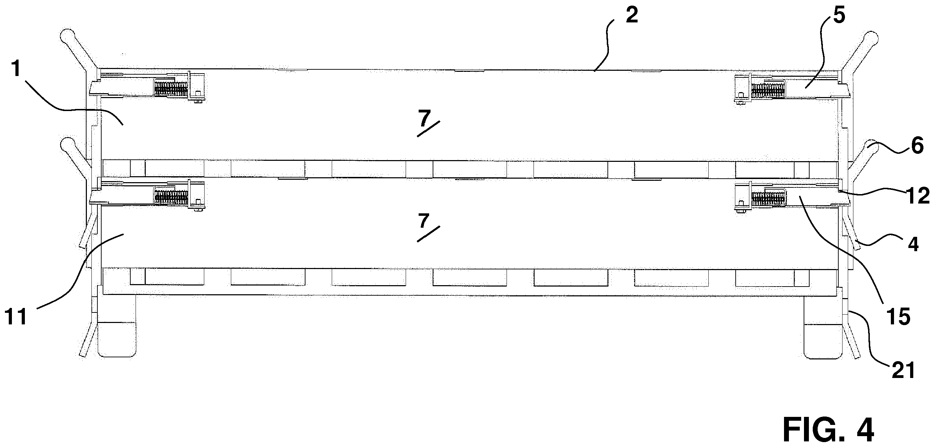

Figure 4 illustrates first support 1 with its upper side 2 and its exterior legs 4, fixing means 5, 15, handles 6, housings 7, and lower support 11 with its legs 21 and through hole 12.

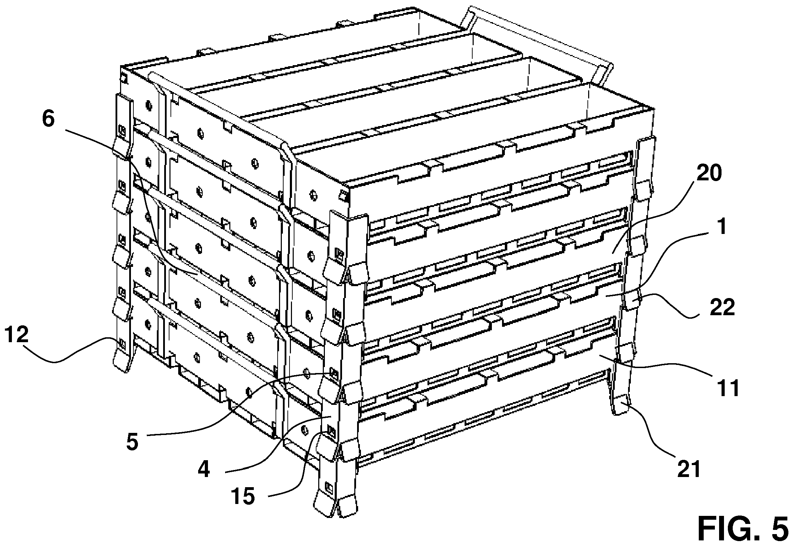

Lastly, Figure 5 illustrates first support 1 with its exterior legs 4, fixing means 5, handles 6, lower support 11 with its legs 21, fixing means 15 and through hole 12 and an upper support 20, with its legs 22.

The mould for food products, comprises at least one support 1, with an upper side 2 comprising at least one housing 7 for housing the food product, which defines an upper opening 2 for placing the food product to be moulded.

It also has external legs 4 and a lower side 3.

The mould comprises fixing means 5, like a pin or latch, which attach and block it to legs 22 of lower support 20, when the second one is placed over the first support 1.

If the first the mould 1 is placed over a lower mould 11, fixing means 15 of lower mould 11, like a pin or latch, which will attach and block it to legs 4 of first support 1, leaving a set of compact moulds, as one piece, which can be transported without problems, without a risk of being opened.

Also, lower side 3 of first support 1 is a lid of lower support 11, in other words, when first support 1 fits onto support 11, lower side 3 of first support 1 blocks the upper opening of second support 11, acting as a lid for said second support 11, and preventing that foreign bodies can access the interior of second support 11.

As explained above, in order to increase the cohesion, external legs 4 of first support 1 fit into lower support 11, so that together with the blocking of the fixing means 15 of lower support 11 through hole 12 in first support 1, they allow forming a set as one piece. Lower support 11 also has another through hole 12 in legs 21, which would be used with a support that were placed beneath it and its fixing means would pass through said through hole 12.

Optionally it has been envisaged that supports 1, 11 comprise handles 6. Said handles 6 are an important element because, if a robot moves the unit of stacked supports by handles 6, hanging in the air, from upper support 20, it allows lifting the whole set of supports 1, 11, 20 at the same time, facilitating the transport thereof and movement from one place to another.

The mould stacking system for food products, comprises at least two supports for food products a first one 1 and a second lower one 11 (Fig. 2).

Both supports include an upper side 2 which with at least one housing 7 that defines an upper opening for placing the food product to be moulded, and a lower side 3.

First support 1 lies on the lower one 11 blocking the upper opening of lower support 11 and making lower side 3 of first support 1 the lid of said upper opening of lower support 11.

Also, supports 1, 11 are attached and blocked together by means of fixing means 15 like a pin or latch, located on lower support 11, which attach and block it to legs 4 of first support 1 blocking both supports, and this way it leaves a compact structure as one piece.

Supports 1, 11 are identical.

One of the constructive options is that fixing means 5, 15 are retractile devices with a blocking latch, like the ones shown in Figure 4, which enter a through hole 12 and being retained. This means that by using a mechanism that exists in another machine that shifts the latch in the opposite direction, it could be possible to robotise the mould stripping and allow supports 1, 11 to be released.

It could also be possible to use a pin type system for this.

As indicated above, supports 1, 11 can include handles 6 that facilitate the fact that when there are different supports stacked, due to the firmness of fixing means 15, it is possible to lift up the set by handles 6 of the first support, using a crane, for example, by handles 6 of the one that has no food to mould and which only acts as a lid.

When more supports are added, it will include an upper support 20, identical to the other two 1, 11, which fits in first support 1, with its lower side being the lid of the opening of first support 1 and with fixing means 5 of first support 1 fitting into legs 22 of said upper support 20. This way, if supports 1, 11 are lifted up, they remain joined together and as explained above, the compact set can be shifted or moved, hanging, without the problem of them possible separating.

This invention describes a new mould and mould stacking system for food products. The examples mentioned herein are non-limiting regarding this invention, and therefore it can have different applications and/or adaptations, all comprised within the scope of the following claims.

## Claims

1. A mould for food products, of the type comprising at least one support (1, 11, 20), **said support comprising** with an upper side (2) which comprises at least one housing (7) defining an upper opening for placing the food product to be moulded, external legs (4) with through hole (12) and a lower side (3), **said support being** suitable to interact with **a** lower support (11) and **an** upper support (20), said supports (1, 11, 20) being identical, wherein **said support** comprises fixing means (5, 15), in form of a pin or a latch, which **is suitable to** attach and block **said** the support (1) to external legs (21) of the upper support (20), and in that **the** lower side (3) **of said support** is **suitable to be** a lid of a lower support (11) to which it is **suitable to be attached** and blocked by means of **its** external legs (4) which fit into lower support (11), **characterized in that** said external legs (4) are suitable to be attached and blocked by respective fixing means (5, 15) of the lower support (11) through **said** hole (12).

2. A mould, according to claim 1, **characterized in that** support (1, 11, 20) comprises handles (6).

3. A mould stacking system for food products, comprising at least two supports for food products a first one (1) and a second lower one (11) **in accordance with claim 1, characterized in that** they comprise an upper side (2) comprising at least one housing (7) defining an upper opening for placing the food product to be moulded, and a lower side (3), with first support (1) lying over the lower one (11) blocking the upper opening of lower support (11) and making lower side (3) of first support (1) the lid of said upper opening of lower support (11) and **in that** supports (1, 11) are attached and blocked together by means of fixing means (15) in form of a pin or latch, located in lower support (11), which attach and block to legs (4) of first support (1) blocking both supports, and with the supports being identical.

4. A system, according to claim 3, **characterized in that** fixing means (5, 15) are retractile devices with a blocking latch.

5. A system, according to any of the claims 3 or 4, **characterized in that** supports (1, 11) comprise handles (6).

6. A system according to some of the claims from claim 3 to claim 5, **characterized in that** it comprises an upper support (20), identical to the other two (1, 11), which fits into first support (1), with its lower side being the lid of the opening (2) of first support (1) and with fixing means (5) of first support (1) fitting into legs (22) of said upper support (20).

## Patentansprüche

1. Form für Lebensmittelprodukte von dem Typ der mindestens einen Träger (1, 11, 20) aufweist, wobei der Träger Folgendes aufweist: eine Oberseite (2), die mindestens ein Gehäuse (7) aufweist, das eine obere Öffnung zum Platzieren des zu formenden Lebensmittelprodukts, äußere Beine (4) mit einem Durchgangsloch (12) sowie eine Unterseite (3) bildet, wobei der Träger dazu geeignet ist, mit einem unteren Träger (11) und einem oberen Träger (20) zusammenzuwirken, wobei die Träger (1, 11, 20) identisch ausgebildet sind, wobei die Träger Befestigungselemente (5, 15) in Form von Stiften oder Riegeln aufweisen, die geeignet sind, den Träger (1) an den äußeren Beinen (21) des oberen Trägers (20) zu befestigen und zu blockieren, und wobei die Unterseite (3) des Trägers geeignet ist, einen Deckel für einen unteren Träger (11) zu bilden, an dem er geeignet ist, mittels seiner äußeren Beine (4), die in den unteren Träger (11) passen, befestigt und blockiert zu werden, **dadurch gekennzeichnet, dass** die äußeren Beine (4) geeignet sind, mittels jeweiliger Befestigungs-elemente (5, 15) des unteren Trägers (11) durch das jeweilige Loch (12) befestigt und blockiert zu werden.

2. Form nach Anspruch 1, **dadurch gekennzeichnet, dass** der Träger (1, 11, 20) Griffe (6) aufweist.

3. System zum Stapeln von Formen für Lebensmittelprodukte, das mindestens zwei Träger für Lebensmittelprodukte, nämlich einen ersten Träger (1) und einen zweiten unteren Träger (11) nach Anspruch 1 aufweist, **dadurch gekennzeichnet, dass** sie eine Oberseite (2) aufweisen, die mindestens ein Gehäuse (7) aufweist, das eine obere Öffnung zum Platzieren des zu formenden Lebensmittelprodukts und eine Unterseite (3) bildet, wobei der erste Träger (1), der über dem unteren Träger (11) liegt, die obere Öffnung des unteren Trägers (11) blockiert und die Unterseite (3) des ersten Trägers (1) zum Deckel der oberen Öffnung des unteren Trägers (11) macht, und dass die Träger (1, 11) aneinander befestigt und blockiert sind, und zwar mittels Befestigungselementen (15) in Form von Stiften oder Riegeln, die sich in dem unteren Träger (11) befinden, die an den Beinen (4) des ersten Trägers (1) befestigt und blockiert werden, wobei beide Träger blockiert werden und wobei die Träger ausgebildet identisch sind.

4. System nach Anspruch 3, **dadurch gekennzeichnet, dass** die Befestigungselemente (5, 15) einziehbare Einrichtungen mit einer Sperrklinke sind.

5. System nach einem der Ansprüche 3 oder 4, **dadurch gekennzeichnet, dass** die Träger (1, 11) Griffe (6) aufweisen.

6. System nach einigen der Ansprüche 3 bis 5, **dadurch gekennzeichnet, dass** es einen oberen Träger (20) aufweist, der identisch mit den anderen beiden Trägern (1, 11) ist und der in den ersten Träger (1) passt, wobei seine Unterseite den Deckel der Öffnung (2) des ersten Trägers (1) bildet, und wobei die Befestigungselemente (5) des ersten Trägers (1) in die Beine (22) des oberen Trägers (20) passen.

## Revendications

1. Un moule pour produits alimentaires, du type comprenant au moins un support (1, 11, 20), ledit support comprenant une partie supérieure (2) qui comprend au moins un boîtier (7) délimitant une ouverture supérieure pour placer le produit alimentaire à mouler, des pieds externes (4) avec trou traversant (12) et une partie inférieure (3), ledit support étant adapté pour interagir avec un support inférieur (11) et **un** support supérieur (20), lesdits supports (1, 11, 20) étant identiques, où ledit support comprend des moyens de fixation (5, 15) sous forme de goupille ou de loquet, qui est adapté pour accrocher et fixer ledit support (1) aux pieds externes (21) du support supérieur (20), et en ce que la partie inférieure (3) dudit support est adaptée pour être un couvercle d'un support inférieur (11) auquel il est adapté pour être accroché et fixé au moyen de ses pieds externes (4) qui rentrent dans le support inférieur (11), **caractérisé en ce que** lesdits pieds externes (4) sont adaptés pour être accrochés et fixés par des moyens de fixations respectifs (5, 15) du support inférieur (11) au travers dudit trou (12).

2. Un moule, selon la revendication 1, **caractérisé en ce que** le support (1, 11, 20) comprend des poignées (6).

3. Un système d'empilage de moules pour produits alimentaires, comprenant au moins deux supports pour produits alimentaires un premier (1) et un second inférieur (11) selon la revendication 1, **caractérisé en ce qu'**ils comprennent une partie supérieure (2) comprenant au moins un boîtier (7) délimitant une ouverture supérieure pour placer le produit alimentaire à mouler, et une partie inférieure (3), avec premier support (1) se trouvant au-dessus de l'inférieur (11) bloquant l'ouverture supérieure du support inférieur (11) et faisant de la partie inférieure (3) du premier support (1) le couvercle de ladite ouverture supérieure du support inférieur (11) et **en ce que** les supports (1, 11) sont accrochés et fixés ensemble au moyen de moyens de fixations (15) sous forme de goupille ou de loquet, situés sur le support inférieur (11), qui s'accrochent et se fixent aux pieds (4) du premier support (1) fixant les deux supports, et avec les supports étant identiques.

4. Un système, selon la revendication 3, **caractérisé en ce que** les moyens de fixations (5, 15) sont des dispositifs rétractiles avec un loquet de blocage.

5. Un système, selon l'une des revendications 3 ou 4, **caractérisé en ce que** les supports (1, 11) comprennent des poignées (6).

6. Un système selon certaines des revendications de la revendication 3 à la revendication 5, **caractérisé en ce qu'**il comprend un support supérieur (20), identique aux deux autres (1, 11), qui rentre dans le premier support (1), avec sa partie inférieure étant le couvercle de l'ouverture (2) du premier support (1) et avec des moyens de fixation (5) du premier support (1) rentrant dans les pieds (22) dudit support supérieur (20).
